# EUROPÄISCHE PATENTSCHRIFT

(11) **EP 2 818 735 B1**
(45) Veröffentlichungstag und Bekanntmachung des Hinweises auf die Patenterteilung: **25.05.2016**
(21) Anmeldenummer: 13173853.6
(22) Anmeldetag: 26.06.2013
(51) Int. Cl.: F16B 35/04

(54) **Befestigungselement**
Fastening element
Elément de fixation

(43) Veröffentlichungstag der Anmeldung: 31.12.2014
(73) Patentinhaber: Nedschroef Fraulautern GmbH, 66740 Saarlouis (DE)
(72) Erfinder: Hein, Dirk, 16540 Hohen Neudorf (DE)
(74) Vertreter: Patentanwälte Dörner & Kötter PartG mbB

(56) Entgegenhaltungen:
- DE-T2- 69 610 838
- US-A- 4 915 560
- US-A- 6 062 786

## Beschreibung

Die Erfindung betrifft ein Befestigungselement, wie beispielsweise eine Schraube oder ein Bolzen, umfassend einen zylindrischen Gewindeabschnitt mit einem Außengewinde, das in ein wenigstens einen Übergangsgewindegang aufweisendes Übergangsgewinde eines sich anschließenden zentrierabschnitts übergeht, wobei der wenigstens eine Übergangsgewindegang derart ausgebildet ist, dass seine Flanken in eine gekrümmte Fläche übergehen.

Befestigungselemente der vorgenannten Art sind beispielsweise in der DE 696 10 838 T2 sowie der US 6,062,789 A beschrieben. Diese Befestigungselemente sind gebildet durch ein zylindrisches Element, wie beispielsweise einen Bolzen oder einer Schraube mit schraubenförmig verlaufendem Außengewinde auf dem Schaft. Das Außengewinde geht in einen Übergangsgewindegang über, der eine gekrümmte Übergangsoberfläche vom kleineren Durchmesser zum größeren Durchmesser aufweist. Die gekrümmte Übergangsfläche ist dafür ausgelegt, über die Komplementärteil-Gewindegänge eines ein Innengewinde aufweisenden zweiten Elements, wie beispielsweise eine Mutter, in Eingriff zu kommen, wenn es sich in einer Gewindebeschädigungs-stellung befindet. An den Übergangsgewindegang schließt sich ein zylindrischer Ansatz an. Dieser Ansatz beschränkt den Bereich Anstellwinkel, wenn das Befestigungselement in das ein Innengewinde aufweisendes zweite Element eingeführt wird. Hierdurch kann eine mögliche Fehlausrichtung beschränkt werden, sodass zumindest ein schraubenförmiger Gewindegang mit der gekrümmten Übergangsoberfläche über die Gewindegänge des komplementären Teils in Eingriff kommen kann, sodass das Befestigungselement kollinear ausgerichtet wird.

Befestigungselemente der vorgenannten Art haben sich in der Praxis bewährt. Insbesondere bei automatisierten Schraubvorgängen können Gewindebeschädigungen weitgehend vermieden werden. Aufgabe der vorliegenden Erfindung ist es, die Befestigungselemente der vorgenannten Art bei gleicher Verschraubungsqualität weiter zu verbessern. Gemäß der Erfindung wird diese Aufgabe durch die Merkmale des gekennzeichneten Teils des Patentanspruchs 1 gelöst.

Mit der Erfindung ist ein Befestigungselement geschaffen, das bei gleicher Verschraubungsqualität gegenüber dem im Stand der Technik bekannten Befestigungselement verbessert ist. Überraschend wurde gefunden, dass die kollineare Ausrichtung des Befestigungselements durch das Vorsehen eines endseitigen kegelstumpfförmigen Abschnitts verbessert ist. Der im Stand der Technik vorgesehene zylindrische Ansatz kann hierbei entfallen, wodurch das Befestigungselement gleichzeitig kürzer und somit auch leichter ausfällt.

Dadurch, dass der Einfädelungsabschnitt dem kegelstumpfförmigen Abschnitt vorgelagert einen zweiten kegelstumpfförmigen Abschnitt mit größerem Öffnungswinkel aufweist, ist eine weitere Verbesserung der kollinearen Ausrichtung erzielt.

Bevorzugt weist der kegelstumpfförmige Abschnitt einen Öffnungswinkel von 80 bis 100 Grad, bevorzugt 90 Grad auf. Es wurde gefunden, dass bei diesem Öffnungswinkel eine optimale kollineare Ausrichtung erzielt wird. Dabei weist der zweite kegelstumpfförmige Abschnitt vorteilhaft einen Öffnungswinkel von 40 bis 50 Grad, vorzugsweise 45 Grad auf.

In weiterer Ausgestaltung der Erfindung beträgt das Verhältnis der Durchmesser von Deckfläche und Grundfläche des endseitigen kegelstumpfförmigen Abschnitts im Wesentlichen Eins zu Drei. Hierdurch ist eine maximale Verkürzung des Befestigungselements bei unverminderter kollineater Ausrichtung erzielt.

In Weiterbildung der Erfindung ist der Kerndurchmesser des wenigstens einen Übergangsgewindegangs des Übergangsgewindes gleich dem Kerndurchmesser des Außengewindes des Gewindeabschnitts. Hierdurch ist ein sanftes Eingleiten des Befestigungselements in das ein Innengewinde aufweisendes Komplementärelement erzielt. Dabei ist bevorzugt der Außendurchmesser des Übergangsgewindes kleiner, als der Außendurchmesser des Außengewindes des Gewindeabschnitts. Gute Ausrichtungseigenschaften können erzielt werden, wenn die gekrümmte Fläche des wenigstens einen Übergangsgewindegangs einen kreisbogenförmigen Querschnitt aufweist.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:

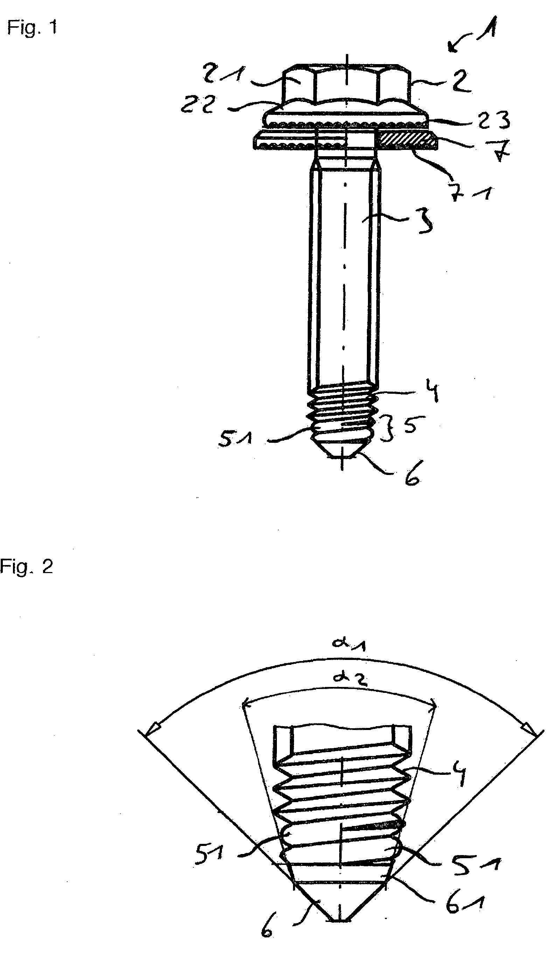

- Figur 1: die schematische Darstellung einer selbstzentrierenden Schraube und
- Figur 2: eine Detailansicht der Schraube aus Figur 1

Das als Ausführungsbeispiel gewählte Befestigungselement ist als Schraube 1 ausgebildet, mit einem Kopf 2, an dem ein Schaft 3 angeformt ist. Der Schaft 3 ist mit einem ein Außengewinde 4 aufweisenden Gewindeabschnitt versehen, das in ein Übergangsgewinde 5 übergeht, an welches sich ein an dem Schaft 3 angeformter kegelstumpfförmiger Abschnitt 6 anschließt, der einen Zentrierabschnitt ausbildet. Unterhalb des Kopfes 2 ist auf dem Schaft 3 eine Scheibe 7 angeordnet.

Der Kopf 2 der Schraube 1, die im Ausführungsbeispiel als M10-Schraube ausgebildet ist, ist in bekannter Art und Weise mit einem Sechsbandprofil 21 versehen, das in ein Flanschteil 22 übergeht. Das Flanschteil 21 ist an seiner der Scheibe 7 zugewandten Seite mit einer Verzahnung 23 versehen. Gleichsam ist auch die Scheibe 7 an Ihrer dem Flanschteil 22 abgewandten Seite mit einer Verzahnung 71 versehen.

Das in den Schaft 3 eingebrachte Gewinde 4 ist im Ausführungsbeispiel als metrisches Gewinde ausgeführt und geht endseitig in ein Übergangsgewinde 5 über, das im Ausführungsbeispiel zwei Übergangsgewindegänge 51 aufweist. Das Übergangsgewinde 5 weist den gleichen Außendurchmesser auf, wie das Gewinde 4 und ist derart ausgebildet, dass seine Flanken in eine gekrümmte Fläche übergehen, welche einen kreisbogenförmigen Querschnitt aufweisen.

An das Übergangsgewinde 5 schließt sich ein kegelstumpfförmiger Abschnitt 6 an, der an den Schaft 3 angeformt ist. Zwischen dem kegelstumpfförmigen Abschnitt 6 und dem Schaft 3 ist dabei ein zweiter kegelstumpfförmiger Abschnitt 61 angeordnet, der einen kleineren Öffnungswinkel als der kegelstumpfförmige Abschnitt 6 aufweist. Im Ausführungsbeispiel weist der kegelstumpfförmige Abschnitt einen Öffnungswinkel von α₁ = 90 Grad und der zweite kegelstumpfförmige Abschnitt einen Öffnungswinkel von α₂ = 45 Grad auf. Die Deckfläche des kegelförmigen Abschnitts 6 weist im Ausführungsbeispiel einen Durchmesser von 2,5 mm auf, der Durchmesser der Deckfläche des kegelstumpfförmigen Abschnitts 6, die gleichzeitig die Grundfläche des zweiten kegelförmigen Abschnitts darstellt, beträgt 7,64 mm. Hierdurch ergibt sich ein Verhältnis der Durchmesser von Deckfläche und Grundfläche von im Wesentlichen 1:3. Die Deckfläche des zweiten kegelförmigen Abschnitts 61 weist einen Durchmesser von 8,23 mm auf.

## Patentansprüche

1. Befestigungselement, umfassend einen zylindrischen Gewindeabschnitt mit einem Außengewinde, das in ein wenigstens einen Übergangsgewindegang aufweisendes Übergangsgewinde eines sich anschließenden Zentrierabschnitts übergeht, wobei der wenigstens eine Übergangsgewindegang derart ausgebildet ist, dass seine Flanken in eine gekrümmte Fläche übergehen, **dadurch gekennzeichnet, dass** der Zentrierabschnitt einen Einfädelungsabschnitt mit einem endseitigen kegelstumpfförmigen Abschnitt (6) aufweist, wobei der Einfädelungsabschnitt dem kegelstumpfförmigen Abschnitt (6) vorgelagert einen zweiten kegelstumpfförmigen Abschnitt (61) mit größerem Öffnungswinkel aufweist.

2. Befestigungselement nach Anspruch 1, **dadurch gekennzeichnet, dass** der kegelstumpfförmige Abschnitt (6) einen Öffnungswinkel von 80 bis 100 Grad, bevorzugt 90 Grad aufweist.

3. Befestigungselement nach Anspruch 1 oder 2, **dadurch gekennzeichnet, dass** der zweite kegelstumpfförmige Abschnitt (61) einen Öffnungswinkel von 40 bis 50 Grad, vorzugsweise 45 Grad aufweist.

4. Befestigungselement nach einem der vorgenannten Ansprüche, **dadurch gekennzeichnet, dass** das Übergangsgewinde (5) zwei oder mehr Gewindegänge (51) aufweist.

5. Befestigungselement nach einem der vorgenannten Ansprüche, **dadurch gekennzeichnet, dass** das Verhältnis der Durchmesser von Deckfläche und Grundfläche des endseitigen kegelstumpfförmigen Abschnitts (6) im Wesentlichen Eins zu Drei beträgt.

6. Befestigungselement nach einem der vorgenannten Ansprüche, **dadurch gekennzeichnet, dass** der Kerndurchmesser des wenigstens einen Übergangsgewindegangs (51) des Übergangsgewindes (5) gleich dem Kerndurchmesser des Außengewindes (4) des Gewindeabschnitts ist.

7. Befestigungselement nach einem der vorgenannten Ansprüche, **dadurch gekennzeichnet, dass** der Außendurchmesser des Übergangsgewindes (5) kleiner ist, als der Außendurchmesser des Außengewindes (4) des Gewindeabschnitts.

8. Befestigungselement nach einem der vorgenannten Ansprüche, **dadurch gekennzeichnet, dass** die gekrümmte Fläche des wenigstens einen Übergangsgewindegangs (51) einen kreisbogenförmigen Querschnitt aufweist.

## Claims

1. Fastening element comprising a cylindrical threaded portion having an outer thread, which merges into a transition thread of an adjoining centring section having at least one transition thread turn, wherein the at least one transition thread turn is designed in such a manner that its flanks merge into a curved surface, **characterised in that** the centring section has a threading portion with an end-side frusto-conical portion (6), wherein the threading portion has a second frusto-conical portion (61) with a greater aperture angle in front of the frusto-conical portion (6).

2. Fastening element according to claim 1, **characterised in that** the frustoconical portion (6) has an aperture angle of 80 to 100 degrees, preferably 90 degrees.

3. Fastening element according to claim 1 or claim 2, **characterised in that** the second frusto-conical portion (61) has an aperture angle of 40 to 50 degrees, preferably 45 degrees.

4. Fastening element according to one of the previous claims, **characterised in that** the transition thread (5) has two or more thread turns (51).

5. Fastening element according to one of the previous claims, **characterised in that** the ratio of the diameters of top surface and base area of the end-side frusto-conical portion (6) is substantially one to three.

6. Fastening element according to one of the previous claims, **characterised in that** the core diameter of the at least one transition thread turn (51) of the transition thread (5) is equal to the core diameter of the outer thread (4) of the thread portion.

7. Fastening element according to one of the previous claims, **characterised in that** the outer diameter of the transition thread (5) is smaller than the outer diameter of the outer thread (4) of the thread portion.

8. Fastening element according to one of the previous claims, **characterised in that** the curved surface of the at least one transition thread turn (51) has an arcuate cross-section.

## Revendications

1. Élément de fixation comprenant un segment fileté cylindrique avec filetage extérieur qui devient le filetage de transition - présentant au moins un pas de filetage - d'un segment de centrage situé dans son prolongement, sachant qu'au moins un pas du filetage de transition est configuré de sorte que ses flancs deviennent une surface courbe, **caractérisé en ce que** le segment de centrage présente un segment d'enfilage avec segment (6) terminal tronconique, sachant que le segment d'enfilage qui précède le segment (6) tronconique présente un deuxième segment (61) tronconique dont l'angle d'ouverture est plus grand.

2. Élément de fixation selon la revendication 1, **caractérisé en ce que** le segment (6) tronconique présente un angle d'ouverture compris entre 80 et 100 degrés, de préférence de 90 degrés.

3. Élément de fixation selon la revendication 1 ou 2, **caractérisé en ce que** le deuxième segment (61) tronconique présente un angle d'ouverture compris entre 40 et 50 degrés, de préférence 45 degrés.

4. Élément de fixation selon l'une des revendications précédentes, **caractérisé en ce que** le filetage de transition (5) présente deux filetages (51) ou plus.

5. Élément de fixation selon l'une des revendications précédentes, **caractérisé en ce que** le rapport entre les diamètres de la surface couvrante et de la surface de base du segment (6) tronconique terminal est essentiellement de un à trois.

6. Élément de fixation selon l'une des revendications précédentes, **caractérisé en ce que** le diamètre du noyau d'au moins un pas (51) du filetage de transition (5) est égal au diamètre du noyau du filetage extérieur (4) du segment fileté.

7. Élément de fixation selon l'une des revendications précédentes, **caractérisé en ce que** le diamètre extérieur du filetage de transition (5) est plus petit que le diamètre extérieur du filetage extérieur (4) du segment fileté.

8. Élément de fixation selon l'une des revendications précédentes, **caractérisé en ce que** la surface courbe d'au moins un pas (51) du filetage de transition présente une section en arc de cercle.
